# EUROPÄISCHE PATENTSCHRIFT

(11) **EP 3 603 047 B1**
(45) Veröffentlichungstag und Bekanntmachung des Hinweises auf die Patenterteilung: **15.07.2020**
(21) Anmeldenummer: 17794286.9
(22) Anmeldetag: 24.10.2017
(51) Int. Cl.: H04N 5/225

(54) **GEHÄUSETEIL FÜR EIN KAMERAGEHÄUSE**
HOUSING PART FOR A CAMERA HOUSING
ÉLÉMENT BOÎTIER POUR UN BOÎTIER DE CAMÉRA

(30) Priorität: 20.03.2017 DE 102017002665
(43) Veröffentlichungstag der Anmeldung: 05.02.2020
(73) Patentinhaber: Rosenberger Hochfrequenztechnik GmbH & Co. KG, 83413 Fridolfing (DE)
(72) Erfinder: AUER, Martin, 83454 Anger (DE); KRAMMER, Benedikt, 83278 Traunstein (DE); MYSYK, Sebastian, 84489 Burghausen (DE); HÖFLING, Thomas, 83413 Fridolfing (DE)
(86) Internationale Anmeldenummer: PCT/EP2017/077157
(87) Internationale Veröffentlichungsnummer: WO 2018/171915

(56) Entgegenhaltungen:
- EP-A1- 2 393 277
- CA-A1- 2 303 525
- DE-A1-102015 115 363
- GB-A- 2 505 538

## Beschreibung

### GEBIET DER ERFINDUNG

Die vorliegende Erfindung betrifft ein Gehäuseteil für ein Kameragehäuse zur Verwendung im Automobilbereich und ein zugehöriges Herstellungsverfahren.

### TECHNISCHER HINTERGRUND

Kameramodule werden im Automobilbereich seit einigen Jahren eingesetzt, um im näheren und weiteren Umfeld eines Kraftfahrzeugs befindliche bewegte oder unbewegte Objekte zu identifizieren. Mittels Signalisierung eines derart identifizierten Objektes bzw. mittels zusätzlichen automatischen Eingriffs in die Manövrierung des Kraftfahrzeugs können auf diese Weise Kollisionen des Kraftfahrzeugs mit dem Objekt verhindert werden.

Vor diesem Hintergrund zeigt die DE 10 2004 034 383 A1 ein beispielhaftes Kameramodul mit einem Kameragehäuse, das im Automobil verwendet wird.

Kameramodule weisen typischerweise optische und elektronische Komponenten auf. Elektronische Komponenten erzeugen im Betrieb Abwärme, die abgeführt werden muss, um den korrekten Betrieb der einzelnen elektronischen Komponenten zu gewährleisten. Die Abführung der Abwärme erfolgt typischerweise über das Gehäuse der Kamera. Kameragehäuse werden aus Gründen des Gewichts, der leichten Herstellbarkeit, der Kosten und der guten Korrosionsbeständigkeit aus einem Kunststoffmaterial, beispielsweise aus Polybutylterephthalat (PBT), hergestellt.

Die in der Elektronik erzeugte Abwärme entsteht räumlich begrenzt und erwärmt somit nur einen begrenzten Bereich des aus Kunststoff hergestellten Kameragehäuses. Hinzu kommt, dass übliche Kunststoffe, nämlich Kunststoffe mit Ausnahme von Kunststoffen mit elektrisch leitenden Füllstoffen, beispielsweise mit Fasern aus Metall, Graphit oder Kohle, eine geringe Wärmeleitfähigkeit aufweisen. Dieser Wärmestau in einem räumlich begrenzten Bereich des Gehäuses hat nachteilig einen negativen Einfluss auf die korrekte Funktion des Kameramoduls.

Dies ist ein Zustand, den es zu verbessern gilt.

Die CA2303525 A1 zeigt ein Kameragehäuse mit einer innenliegenden und einer aussenliegenden Gehäuseschale, die aus Materialien mit unterschiedlicher Wärmeleitfähigkeit gefertigt sind.

GB2505538 A offenbart die Schichtung einer innenseitigen Gehäuseschicht aus einem Metall und einer aussenseitigen Gehäuseschicht aus einem Kunststoff.

EP2393277 A1 zeigt Wärmetransport über einen Wärmeflusspfad über flächenmäßig begrenzte Bauteile, die sich nur über einen Bruchteil der Fläche des Außengehäuses erstrecken.

### ZUSAMMENFASSUNG DER ERFINDUNG

Vor diesem Hintergrund liegt der vorliegenden Erfindung die Aufgabe zugrunde, ein Kameragehäuse anzugeben, das eine verbesserte Wärmeableitung der in der internen Elektronik des Kameramoduls erzeugten Abwärme in den Außenbereich des Kameramoduls ermöglicht.

Erfindungsgemäß wird diese Aufgabe durch ein Gehäuseteil für ein Kameragehäuse mit den Merkmalen des Patentanspruchs 1 und durch ein zugehöriges Herstellungsverfahren mit den Merkmalen des Patentanspruchs 11 gelöst.

Demgemäß sind vorgesehen:
- Ein Gehäuseteil für ein Kameragehäuse, insbesondere zur Verwendung im Automobilbereich, mit einer außenseitigen Gehäuseschale und einer innenseitigen Gehäuseschale, wobei die außenseitige Gehäuseschale aus einem Kunststoff und die innenseitige Gehäuseschale aus einem Material mit einer Wärmeleitfähigkeit hergestellt ist, die höher als die Wärmeleitfähigkeit des Kunststoffs der außenseitigen Gehäuseschale ist, wobei über alle gegenüberliegenden Flächenbereiche der außenseitigen Gehäuseschale und der innenseitigen Gehäuseschale die außenseitige Gehäuseschale jeweils direkt mit der innenseitigen Gehäuseschale verbunden ist.
- Ein Kameragehäuse, insbesondere zur Verwendung im Automobilbereich, mit mindestens zwei Gehäuseteilen, wobei mindestens ein Gehäuseteil jeweils ein erfindungsgemäßes Gehäuseteil ist.
- Ein Kraftfahrzeug mit einem erfindungsgemäßen Kameragehäuse.
- Ein Herstellungsverfahren für ein Gehäuseteil, welches die folgenden Schritte umfasst: Spritzgießen einer außenseitigen Gehäuseschale aus einem Kunststoff; Herstellen einer innenseitigen Gehäuseschale aus einem Material mit einer Wärmeleitfähigkeit, die höher als die Wärmeleitfähigkeit des Kunststoffs der außenseitigen Gehäuseschale ist, und Zusammenpressen der außenseitigen Gehäuseschale und der innenseitigen Gehäuseschale, so dass über alle gegenüberliegenden Flächenbereiche der außenseitigen Gehäuseschale und der innenseitigen Gehäuseschale die außenseitige Gehäuseschale jeweils direkt mit der innenseitigen Gehäuseschale verbunden ist.

Die der vorliegenden Erfindung zugrunde liegende Erkenntnis / Idee besteht darin, dass das jeweilige Gehäuseteil des Kameragehäuses zwei Gehäuseschalen aufweist, nämlich eine außenseitige Gehäuseschale aus einem Kunststoff und eine innenseitige Gehäuseschale aus einem Material mit einer Wärmeleitfähigkeit, die höher als die Wärmeleitfähigkeit des Kunststoffs der außenseitigen Gehäuseschale ist. Bei dem Material der innenseitigen Gehäuseschale handelt es sich bevorzugt um ein Metall. Daneben kann aber auch ein Kunststoff mit elektrisch leitenden Füllstoffen, beispielsweise mit metallischen Fasern, verwendet werden. Auf diese Weise werden die werkstoffspezifischen Vorteile der beiden Materialien Metall und Kunststoff im Gehäuseteil des Kameragehäuses kombiniert:
Das Metall bzw. die elektrisch leitenden Füllstoffe der innenseitigen Gehäuseschale weist bzw. weisen im Vergleich zum Kunststoff eine deutlich bessere Wärmekapazität und Wärmeleitfähigkeit sowie deutlich bessere EMV-Eigenschaften auf. Der Kunststoff der außenseitigen Gehäuseschale besitzt deutlich bessere Korrosionseigenschaften und ist einfacher mit weiteren aus Kunststoff hergestellten Gehäuseteilen bzw. Gehäuseschalen des Kameragehäuses verbindbar.

Erstrecken sich die gegenüberliegenden Flächenbereiche der innenseitigen und der außenseitigen Gehäuseschale nicht nur über einen begrenzten Bereich des Kameragehäuses, auf den die Abwärme der internen Elektronik direkt gelenkt wird, sondern auf einen größeren Bereich des Kameragehäuses, so kann aufgrund der guten Wärmeleitfähigkeit des Metalls bzw. der elektrisch leitenden Füllstoffe die auf die innenseitige Gehäuseschale auftretende Abwärme vergleichsweise schnell über den gesamten Flächenbereich der innenseitigen Gehäuseschale verteilt werden. Sind die innenseitige und die außenseitige Gehäuseschale erfindungsgemäß über alle gegenüberliegenden Flächenbereiche direkt miteinander verbunden, so wird die über den gesamten Flächenbereich der innenseitigen Gehäuseschale sich schnell verbreiternde Abwärme vorteilhaft auf einen ebenso großen gegenüberliegenden Flächenbereich der außenseitigen Gehäuseschale übertragen. Hierbei wird pro Flächeneinheit der innenseitigen bzw. außenseitigen Gehäuseschale jeweils nur ein Bruchteil der ursprünglich nur von einem begrenzten Bereich der innenseitigen Gehäuseschale aufgenommenen gesamten Abwärme von der innenseitigen auf die außenseitige Gehäuseschale transferiert.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Als besonders vorteilhaft erweist sich, wenn die gegenüberliegenden Flächenbereiche der innenseitigen Gehäuseschalen und der außenseitigen Gehäuseschale sich über die gesamte Außenfläche der innenseitigen Gehäuseschale bzw. über die gesamte Innenfläche der außenseitigen Gehäuseschale erstreckt. Auf diese Weise ist gewährleistet, dass die von der innenseitigen Gehäuseschale typischerweise in einem begrenzten Flächenbereich schnell aufgenommene Abwärme ebenso schnell über den gesamten Flächenbereich des aus innenseitiger und außenseitiger Gehäuseschale bestehenden Gehäuseteiles verteilt wird.

Die direkte Verbindung zwischen der innenseitigen und der außenseitigen Gehäuseschale im Bereich der jeweils gegenüberliegenden Flächenbereiche erfolgt bevorzugt von Luft befreit, d.h. ohne Einschluss von Luft. Die von der innenseitigen Gehäuseschale abgegebene Abwärme wird somit nicht in einer zwischen der innenseitigen und der außenseitigen Gehäuseschale befindlichen Luftschicht gespeichert und erst zeitlich verzögert an die außenseitige Gehäuseschale weitergegeben, sondern wird schnellstmöglich von der gegenüberliegenden außenseitigen Gehäuseschale aufgenommen.

Der von der dazwischen befindlichen Luft befreite direkte Übergang zwischen der innenseitigen und der außenseitigen Gehäuseschale wird in einer bevorzugten Ausprägung der Erfindung durch eine reibschlüssige Verbindung zwischen der innenseitigen und der außenseitigen Gehäuseschale realisiert. Der Reibschluss zwischen der innenseitigen und der außenseitigen Gehäuseschale ermöglicht zusätzlich eine stabile mechanische Fixierung zwischen der innenseitigen und der außenseitigen Gehäuseschale.

Um die direkte Übergangsfläche zwischen der innenseitigen und der außenseitigen Gehäuseschale zusätzlich zu erhöhen und damit einen zusätzlich beschleunigten Wärmeübergang zwischen der innenseitigen und der außenseitigen Gehäuseschale zu verwirklichen, weist mindestens eine Außenfläche der innenseitigen Gehäuseschale jeweils mindestens eine Erhöhung auf, die jeweils in einer zugehörigen Vertiefung an der gegenüberliegenden Innenfläche der außenseitigen Gehäuseschale gesteckt ist.

Alternativ ist von der Erfindung auch eine technische Realisierung mit abgedeckt, bei der die einzelne Erhöhung auf mindestens einer Innenfläche der außenseitigen Gehäuseschale vorgesehen und in einer zugehörigen Vertiefung auf einer gegenüberliegenden Außenfläche der innenseitigen Gehäuseschale gesteckt ist.

In einer ersten Variante ist die mindestens eine Erhöhung jeweils als rippenförmige Erhöhung realisiert, die in einer zugehörigen schlitzförmigen Vertiefung gesteckt ist. Um eine reibschlüssige Verbindung zwischen der innenseitigen und der außenseitigen Gehäuseschale zu realisieren, ist die Breite der einzelnen rippenförmigen Erhöhung jeweils geringfügig größer als die Breite der zugehörigen schlitzförmigen Vertiefung ausgelegt.

In einer zweiten Variante ist die mindestens eine Erhöhung jeweils als kreuzrippenförmige Erhöhung realisiert, die in einer zugehörigen kreuzschlitzförmigen Vertiefung gesteckt ist. Auch hier ist im Hinblick auf eine reibschlüssige Verbindung die Breite der einzelnen kreuzrippenförmig angeordneten rippenförmigen Erhöhungen jeweils geringfügig größer als die Breite der zugehörigen kreuzrippenförmig angeordneten schlitzförmigen Vertiefungen ausgelegt.

In einer dritten Variante schließlich ist die mindestens eine Erhöhung jeweils als stiftförmige Erhöhung realisiert, die in einer zugehörigen sacklochförmigen Vertiefung gesteckt ist. Auch hier ist im Hinblick auf eine reibschlüssige Verbindung der Außendurchmesser der stiftförmigen Erhöhung größer als der Innendurchmesser der sacklochförmigen Vertiefung auszulegen.

An mindestens eine Innenfläche der innenseitigen Gehäuseschale ist bevorzugt jeweils mindestens eine Erhöhung vorgesehen. Auf diese Weise wird die zum Innenraum des Kameragehäuses gerichtete Oberfläche der innenseitigen Gehäuseschale zusätzlich vergrößert und damit der Wärmefluss der innenseitigen Gehäuseschale vorteilhaft zusätzlich verbessert bzw. beschleunigt.

In einer ersten Ausprägung ist eine derartige Erhöhung, die jeweils an mindestens einer Innenfläche der innenseitigen Gehäuseschale vorgesehen ist, als rippenförmige Erhöhung ausgestaltet.

In einer zweiten Ausprägung ist eine derartige Erhöhung, die jeweils an mindestens einer Innenfläche der innenseitigen Gehäuseschale vorgesehen ist, als kreuzrippenförmige Erhöhung ausgestaltet.

In einer dritten Ausprägung schließlich ist eine derartige Erhöhung, die jeweils an mindestens einer Innenfläche der innenseitigen Gehäuseschale vorgesehen ist, als stiftförmige Erhöhung ausgestaltet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A: eine Querschnittsdarstellung eines erfindungsgemäßen Kameragehäuses,
- Fig. 1B: eine dreidimensionale Darstellung eines erfindungsgemäßen Kameragehäuses,
- Fig. 2A: eine dreidimensionale Querschnittsdarstellung eines erfindungsgemäßen Gehäuseteils mit Ausbruch,
- Fig. 2B: eine Draufsicht eines erfindungsgemäßen Gehäuseteils,
- Fig. 3A: eine dreidimensionale Darstellung einer ersten Variante eines erfindungsgemäßen Gehäuseteils,
- Fig. 3B: eine dreidimensionale Darstellung einer innenseitigen Gehäuseschale einer ersten Variante eines erfindungsgemäßen Gehäuseteils,
- Fig. 4A: eine dreidimensionale Darstellung einer zweiten Variante eines erfindungsgemäßen Gehäuseteils,
- Fig. 4B: eine dreidimensionale Darstellung einer innenseitigen Gehäuseschale einer zweiten Variante eines erfindungsgemäßen Gehäuseteils,
- Fig. 4C: eine Querschnittsdarstellung einer zweiten Variante eines erfindungsgemäßen Gehäuseteils,
- Fig. 5A: eine dreidimensionale Darstellung einer dritten Variante eines erfindungsgemäßen Gehäuseteils,
- Fig. 5B: eine dreidimensionale Darstellung einer innenseitigen Gehäuseschale einer dritten Variante eines erfindungsgemäßen Gehäuseteils und
- Fig. 5C: eine Querschnittsdarstellung einer dritten Variante eines erfindungsgemäßen Gehäuseteils.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

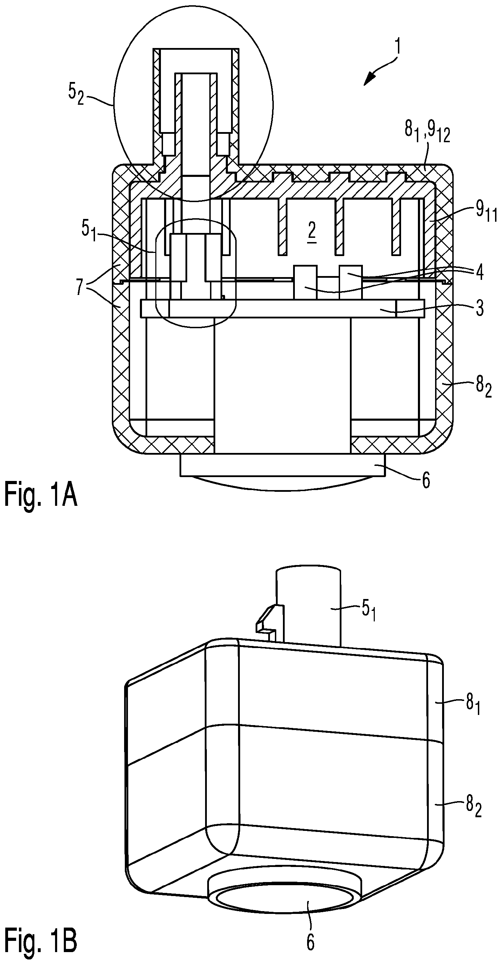

Figur 1A zeigt eine schematische Querschnittsdarstellung eines Kameramoduls 1, wie es insbesondere im Automobilbereich eingesetzt wird, während Figur 1B eine dreidimensionale Darstellung des Kameramoduls 1 darstellt:
Im Innenraum 2 des Kameramoduls 1 befindet sich eine Leiterplatte 3, die typischerweise mit mehreren Elektronik-Komponenten 4 bestückt ist. Bei den Elektronikkomponenten handelt es sich bevorzugt und nicht abschließend um optoelektronische Bildsensoren und analoge und digitale Bausteine zur Vorverarbeitung der opto-elektronisch erfassten Bilddaten.

Die vorverarbeiteten Bilddaten werden über eine Kommunikationsschnittstelle an weitere Datenverarbeitung-Einheiten innerhalb des Kraftfahrzeugs übertragen. Als Kommunikationsschnittstelle dient ein in Figur 1 nur schematisch dargestellter erster Steckverbinder 5₁, der als sogenannter Leiterplattensteckverbinder mit der Leiterplatte 3 mechanisch und elektrisch verbunden ist. Dieser erste Steckverbinder 5₁ kann, wie in Fig. 1A dargestellt ist, direkt in einen zweiten Steckverbinder 5₂ übergehen, der als Gehäusesteckverbinder mechanisch mit dem Gehäuse des Kameramoduls 1 verbunden ist oder in das Gehäuse des Kameramoduls 1 integriert ist. Der andere Ausgang des zweiten Steckverbinders 5₂ ist mit einem in den Figuren 1A und 1B jeweils nicht dargestellten Datenkabel mechanisch und elektrisch verbunden ist. Alternativ zur Kombination von ersten Steckverbinder 5₁ und zweiten Steckverbinder 5₂ kann der Ausgang des ersten Steckverbinders 5₁ auch mit dem Datenkabel direkt elektrisch und mechanisch verbunden sein, das hermetisch dicht durch eine Öffnung im Gehäuse des Kameramoduls 1 nach außen geführt ist Der erste und zweite Steckverbinder 5₁ und 5₂ genügen jeweils den technischen Anforderungen eines beliebigen Schnittstellenstandards für Hochgeschwindigkeits-Datenübertragung im Automobilbereich, beispielsweise FAKRA (Fachkreis Automobil, HSD (High-Speed-Data; deutsch: Hochgeschwindigkeitsdaten) oder HFM (High-Speed-Fakra-Mini).

Die Bildsensoren der Leiterplatte 3 sind optisch mit einer optischen Linse 6 verbunden.

Der Innenraum 2 des Kameramoduls 1 ist über ein Kameragehäuse 7 hermetisch dicht abgeschlossen. Im Kameragehäuse 7 sind einzig, wie aus Figur 1B hervorgeht, der zweite Steckverbinder 5₂ und die optische Linse 6 hermetisch dicht integriert. Das Kameragehäuse 7 setzt sich bevorzugt aus zwei Gehäuseteilen 8₁ und 8₂ zusammen. Von der Erfindung ist für das Kameragehäuse 7 aber auch eine größere Anzahl von Gehäuseteilen mit abgedeckt. Im Hinblick auf eine dichte Verschließung des Innenraums 2 des Kameramoduls 1 sind die beiden Gehäuseteile 8₁ und 8₂ umlaufend miteinander verschweißt. Typischerweise werden die aus Kunststoff hergestellten und weiter unten noch näher beschriebenen außenseitigen Gehäuseschalen der beiden Gehäuseteile 8₁ und 8₂ bevorzugt mittels Laserschweißen miteinander verbunden.

Erfindungsgemäß setzt sich mindestens ein Gehäuseteil 8₁ und 8₂ jeweils aus einer innenseitigen Gehäuseschale und einer außenseitigen Gehäuseschale zusammen. Bevorzugt weist dasjenige Gehäuseteil 8₁ bzw. weisen diejenigen Gehäuseteile jeweils eine innenseitige Gehäuseschale 9₁₁ und eine außenseitige Gehäuseschale 9₁₂ auf, das bzw. die den Elektronik-Komponenten 4 gegenüber angeordnet ist bzw. sind und mit dem höchsten Anteil der von den Elektronik-Komponenten 4 erzeugten Abwärme bestrahlt wird bzw. werden. In den Figuren der Zeichnung ist dies das Gehäuseteil 8₁, in dem der Steckverbinder 5 integriert ist und das den Elektronik-Komponenten 4 gegenüber angeordnet ist. Selbstverständlich können auch die anderen Gehäuseteile des Kameragehäuses 1, wie das Gehäuseteil 8₂, in dem typischerweise die optische Linse 6 integriert ist, jeweils eine innenseitige und eine außenseitige Gehäuseschale aufweisen, um die von den Elektronik-Komponenten 4 erzeugte Abwärme noch schneller in den Außenraum des Kameramoduls 1 abzuführen.

Die Gehäuseteile 8₁ und 8₂ weisen typischerweise jeweils mehrere miteinander verbundene Gehäusebereiche mit jeweils einer unterschiedlich orientierten Innen- bzw. Außenfläche auf. In den Figuren der Zeichnung weisen die Gehäuseteile 8₁ und 8₂ beispielsweise jeweils vier innen- bzw. außenseitige Seitenflächen und eine innen- bzw. außenseitige Boden- oder Deckenfläche auf. Von der Erfindung sind aber auch Gehäuseteile mit einer hiervon abweichenden Anzahl von Gehäusebereichen mit jeweils einer unterschiedlich orientierten Innen- bzw. Außenflächen mit abgedeckt. Die Boden- und Deckenfläche sind jeweils an allen ihren Flächengrenzen jeweils mit einer anderen Fläche, d.h. einer Seitenfläche, verbunden. Die Seitenflächen sind jeweils an einer Flächengrenze offen, d.h. mit keiner weiteren Fläche verbunden, während sie an den übrigen Flächengrenzen mit einer anderen Fläche, d.h. mit einer anderen Seitenfläche oder der Boden- bzw. Deckenfläche, verbunden sind.

Bevorzugt ist im Hinblick auf einen optimalen Wärmefluss in einem erfindungsgemäßen Gehäuseteil 8₁, wie in allen Figuren der Zeichnung dargestellt ist, die innenseitige Gehäuseschale 9₁₁ über alle gegenüberliegenden Flächenbereiche mit der außenseitigen Gehäuseschale 9₁₂ direkt ohne Einschluss einer dazwischen befindlichen Luftschicht miteinander verbunden. Daneben können die innenseitige Gehäuseschale 9₁₁ und die außenseitige Gehäuseschale 9₁₂ auch nur über einen reduzierten gegenüberliegenden Flächenbereich der Seiten-, Boden- bzw. Decken-Flächen direkt ohne Lufteinschluss miteinander verbunden sein.

Die außenseitige Gehäuseschale 9₁₂ ist aus einem Kunststoff, beispielsweise aus Polybutylterephthalat (PBT), in einer Spritzguss-Technologie hergestellt. Die innenseitige Gehäuseschale 9₁₁ ist aus einem Material mit einer Wärmeleitfähigkeit hergestellt, die höher als die Wärmeleitfähigkeit des Kunststoffs der außenseitigen Gehäuseschale 9₁₂ ist. Bevorzugt wird ein Metall, beispielsweise Zink, verwendet. Aber auch ein Kunststoff mit elektrisch leitenden Füllstoffen, beispielsweise mit metallischen Fasern, ist möglich. Die innenseitige Gehäuseschale 9₁₁ aus Metall kann in Druckguss-, Sinter- oder Zerspannungstechnologie hergestellt werden. Die innenseitige Gehäuseschale 9₁₁ aus einem Kunststoff mit elektrisch leitenden Füllstoffen kann beispielsweise mittels einer Spritzgusstechnik hergestellt werden.

Das Metall bzw. die elektrisch leitenden Füllstoffe der innenseitigen Gehäuseschale 9₁₁ weist bzw. weisen eine deutlich höhere Wärmeleitfähigkeit als der Kunststoff der außenseitigen Gehäuseschale 9₁₂ auf. Auf diese Weise wird die in einem begrenzten Bereich der innenseitigen Gehäuseschale 9₁₁ empfangene Abwärme der Elektronik-Komponenten 4 vergleichsweise schnell über die gesamte innenseitige Gehäuseschale 9₁₁ verteilt. Im Idealfall sind die Außenfläche der innenseitigen Gehäuseschale 9₁₁ und die Innenfläche der außenseitigen Gehäuseschale 9₁₂ gleich groß. Die der innenseitigen Gehäuseschale 9₁₁ gegenüberliegenden Flächenbereiche der äußeren Gehäuseschale 9₁₂ werden somit gegenüber einem üblichen Kameragehäuse einzig aus Kunststoff jeweils nur mit einem Bruchteil der von den Elektronik-Komponenten 4 erzeugten Abwärme beaufschlagt.

Da die innenseitige Gehäuseschale 9₁₁ in den jeweils gegenüberliegenden Flächenbereichen direkt ohne dazwischen gelagerte Luft an der außenseitigen Gehäuseschale 9₁₂ anliegt, wird die von der innenseitigen Gehäuseschale 9₁₁ an die außenseitige Gehäuseschale 9₁₂ abzuführende Abwärme nicht in der dazwischen gelagerten Luft zwischengespeichert und erst verzögert an die außenseitige Gehäuseschale 9₁₂ übertragen. Vielmehr wird die abzuführende Abwärme sofort von der innenseitigen Gehäuseschale 9₁₁ an die außenseitige Gehäuseschale 9₁₂ abgegeben.

Da die innere Gehäuseschale 9₁₁, deren Außenfläche der Innenfläche der äußeren Gehäuseschale 9₁₂ entspricht, aus einem Metall bzw. aus einem Kunststoff mit integrierten elektrisch leitenden Füllstoffen hergestellt ist, verbessert sich damit zusätzlich die EMV-Eigenschaft des Kameramoduls 1.

Um den Wärmetransfer zwischen der innenseitigen Gehäuseschale 9₁₁ und der außenseitigen Gehäuseschale 9₁₂ zusätzlich zu beschleunigen, werden die gegenüberliegenden Flächenbereiche der innenseitigen Gehäuseschale 9₁₁ und der außenseitigen Gehäuseschale 9₁₂ zusätzlich vergrößert. Hierzu ist in den jeweils gegenüberliegenden Flächenbereichen auf der Außenfläche der innenseitigen Gehäuseschale 9₁₁ mindestens eine Erhöhung, bevorzugt mehrere in einem bestimmten Abstand jeweils beabstandete Erhöhungen, vorgesehen, die in einer zugehörigen Vertiefung auf der Innenseite der außenseitigen Gehäuseschale 9₁₂ gesteckt sind. Auf diese Weise wird die Oberfläche der jeweils gegenüberliegenden Flächenbereichen der innenseitigen Gehäuseschale 9₁₁ und der außenseitigen Gehäuseschale 9₁₂ zusätzlich vergrößert.

Alternativ können die Erhöhungen auch auf den Innenflächen der außenseitigen Gehäuseschale 9₁₂ vorgesehen sein, die in zugehörigen Vertiefungen auf den Außenflächen der innenseitigen Gehäuseschalen 9₁₁ gesteckt sind.

Die einzelnen Erhöhungen sind bevorzugt direkt ohne Lufteinschluss in den zugehörigen Vertiefungen gesteckt, um den Wärmetransfer zwischen der innenseitigen Gehäuseschale 9₁₁ und der außenseitigen Gehäuseschale 9₁₂ zu beschleunigen.

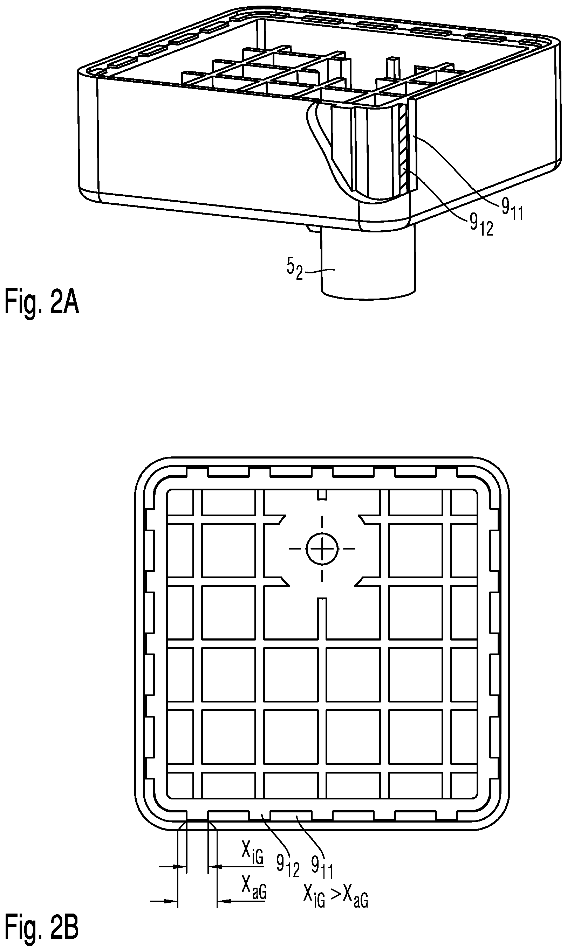

Eine von Luft befreite, direkte Verbindung zwischen den einzelnen Erhöhungen der innenseitigen Gehäuseschale 9₁₁ und den zugehörigen Vertiefungen der außenseitigen Gehäuseschale 9₁₂ wird insbesondere durch eine reibschlüssige Verbindung zwischen den einzelnen Erhöhungen und den zugehörigen Vertiefungen und damit zwischen der innenseitigen Gehäuseschale 9₁₁ und der außenseitigen Gehäuseschale 9₁₂ erzielt. Hierbei ist die Breite X_{iG} einer Erhöhung auf der innenseitigen Gehäuseschale 9₁₁, wie in den Figuren 2A und 2B dargestellt ist, größer als die Breite X_{aG} einer zugehörigen Vertiefung auf der außenseitigen Gehäuseschale 9₁₂ auszulegen. Durch eine derartige reibschlüssige Verbindung wird die innenseitige Gehäuseschale 9₁₁ zusätzlich mechanisch an die außenseitige Gehäuseschale 9₁₂ fixiert.

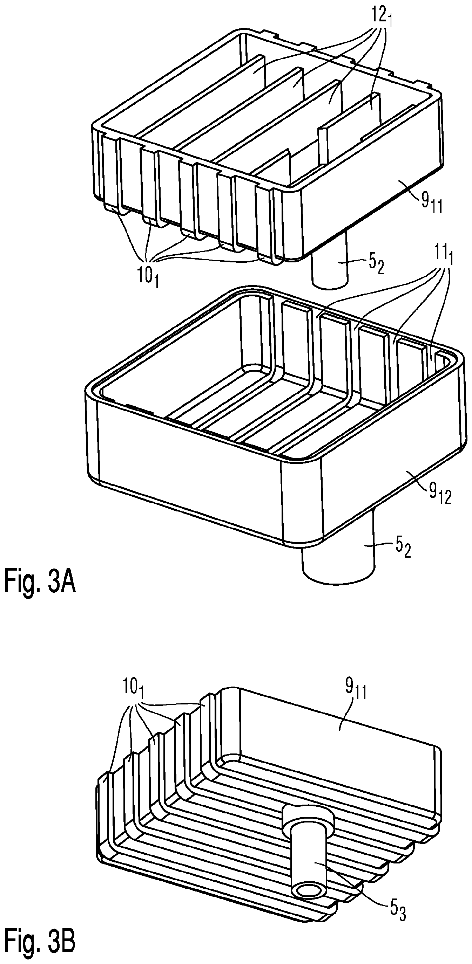

In einer ersten Variante gemäß der Figuren 3A und 3B sind die Erhöhungen auf der Außenfläche der innenseitigen Gehäuseschale 9₁₁ als rippenförmige Erhöhungen 10₁ realisiert, die in zugehörigen schlitzförmigen Vertiefungen 11₁ auf der Innenfläche der außenseitigen Gehäuseschale 9₁₂ gesteckt sind. Hierbei können die rippenförmige Erhöhungen 10₁ in allen außenseitigen Flächen bzw. außenseitigen Flächenbereichen der innenseitigen Gehäuseschale 9₁₁ und die zugehörigen schlitzförmigen Vertiefungen 11₁ in allen innenseitigen Flächen bzw. innenseitigen Flächenbereichen der außenseitigen Gehäuseschale 9₁₂ realisiert sein. Daneben können die rippenförmige Erhöhungen 10₁ und die zugehörigen schlitzförmigen Vertiefungen 11₁ auch nur in einer reduzierten Anzahl von außenseitigen Flächen bzw. außenseitigen Flächenbereichen der innenseitigen Gehäuseschale 9₁₁ bzw. von innenseitigen Flächen bzw. innenseitigen Flächenbereichen der außenseitigen Gehäuseschale 9₁₂ verwirklicht sein. In den Figuren 3A und 3B befinden sich beispielsweise die rippenförmige Erhöhungen 10₁ und die zugehörigen schlitzförmigen Vertiefungen 11₁ jeweils nur auf zwei Seitenflächen und der Decken- bzw. Bodenfläche der innenseitigen Gehäuseschale 9₁₁ und der außenseitigen Gehäuseschale 9₁₂.

Das Querschnittsprofil der einzelnen rippenförmigen Erhöhungen 10₁ und der zugehörigen schlitzförmigen Vertiefungen 11₁ kann wie in den Figuren 3A und 3B rechteckförmig bzw. quadratisch sein. Alternativ ist auch ein dreieckförmiges Querschnittsprofil möglich. Im Bereich der Seitenflächen der innenseitigen Gehäuseschale 9₁₁ und der außenseitigen Gehäuseschale 9₁₂ sind auch kreisförmige oder ellipsenförmige Querschnittsprofile möglich.

Die Höhe und die Breite der rippenförmigen Erhöhungen 10₁ und die Tiefe bzw. die Breite der zugehörigen schlitzförmigen Vertiefungen 11₁ sind in Längserstreckung bevorzugt konstant. In einer alternativen Ausprägung können sich die Höhe und die Breite der rippenförmige Erhöhungen 10₁ und der zugehörigen schlitzförmigen Vertiefungen 11₁ jeweils im Bereich der Seitenflächen der innenseitigen Gehäuseschale 9₁₁ und der außenseitigen Gehäuseschale 9₁₂ in Richtung der Deckenfläche verringern.

Die Abstände zwischen den einzelnen rippenförmigen Erhöhungen 10₁ und zwischen den zugehörigen schlitzförmigen Vertiefungen 11₁ können entweder konstant oder unterschiedlich sein.

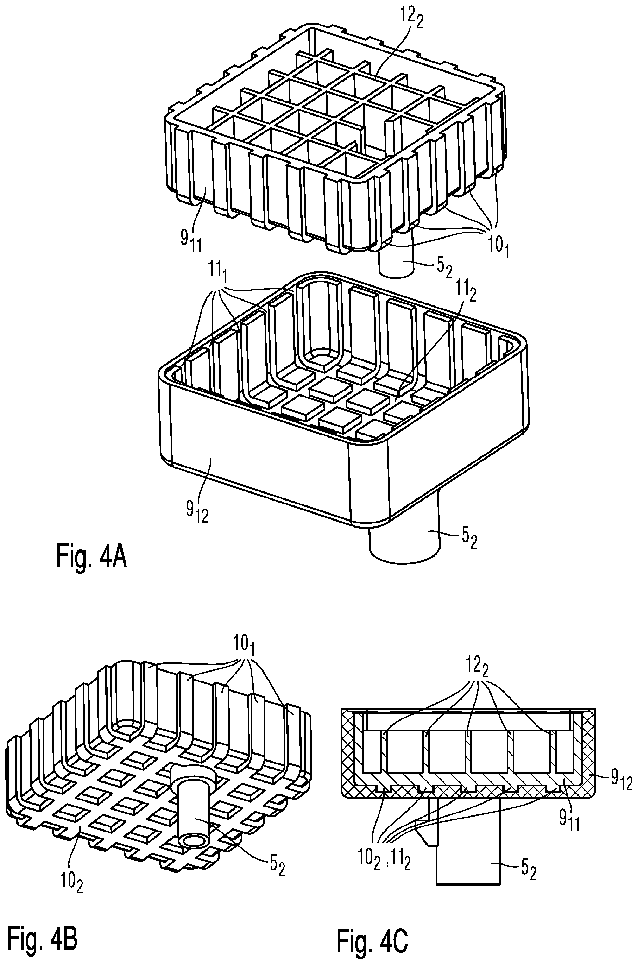

In einer zweiten Variante gemäß der Figuren 4A, 4B und 4C sind die Erhöhungen im Bereich der außenseitigen Deckenfläche auf der innenseitigen Gehäuseschale 9₁₁ jeweils als kreuzrippenförmige Erhöhungen 10₂ und die zugehörigen Vertiefungen im Bereich der innenseitigen Deckenfläche auf der außenseitigen Gehäuseschale 9₁₂ jeweils als kreuzschlitzförmige Vertiefungen 11₂ realisiert. Anstelle eines rechteckförmigen oder quadratischen Querschnittsprofils der kreuzrippenförmigen Erhöhungen 10₂ und der kreuzschlitzförmigen Vertiefungen 11₂ sind bei der zweiten Variante auch dreiecksförmige Querschnittsprofil möglich.

Auch in der zweiten Variante können die Abstände zwischen den Einzelrippen der kreuzrippenförmigen Erhöhungen 10₁ und zwischen den einzelnen zugehörigen Einzelschlitzen der kreuzschlitzförmigen Vertiefungen 11₁ entweder konstant oder unterschiedlich sein.

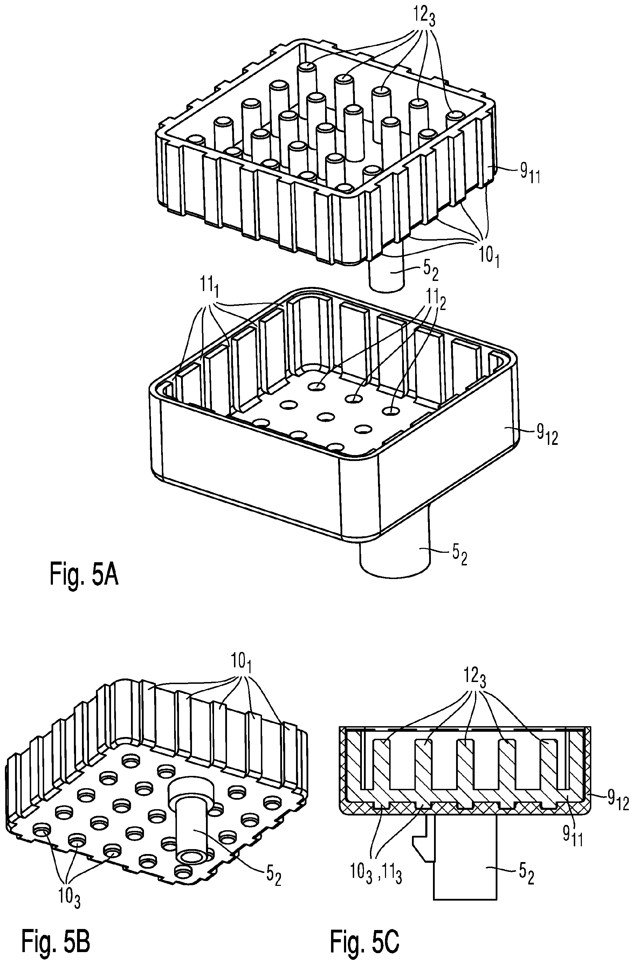

In einer dritten Variante gemäß der Figuren 5A, 5B und 5C sind die Erhöhungen im Bereich der außenseitigen Deckenfläche auf der innenseitigen Gehäuseschale 9₁₁ jeweils als stiftförmige Erhöhungen 10₃ und die zugehörigen Vertiefungen im Bereich der innenseitigen Deckenfläche auf der außenseitigen Gehäuseschale 9₁₂ jeweils als sacklochförmige Vertiefungen 11₃ realisiert. Anstelle eines kreisförmigen Querschnittsprofils der stiftförmigen Erhöhungen 10₃ und der sacklochförmigen Vertiefungen 11₃ gemäß der Figuren 5A und 5B sind auch rechteckförmige, quadratische, dreieckförmige, vieleckförmige oder ellipsenförmige Querschnittsprofile möglich.

In der dritten Variante können die einzelnen stiftförmigen Erhöhungen 10₃ bzw. die zugehörigen sacklochförmigen Vertiefungen 11₃ jeweils in einem konstanten Abstand, d.h. in einem bestimmten Raster, oder vollkommen irregulär, d.h. stochastisch verteilt, positioniert sein. Auch können die Höhe der einzelnen stiftförmigen Erhöhungen 10₃ und die Tiefe der zugehörigen sacklochförmigen Vertiefungen 11₃ jeweils zueinander konstant oder zueinander unterschiedlich sein. Daneben kann der Außendurchmesser der einzelnen stiftförmigen Erhöhungen 10₃ und der Innendurchmesser der einzelnen sacklochförmigen Vertiefungen 11₃ jeweils konstant oder unterschiedlich sein.

In einer weiteren Ausprägung der Erfindung wird die Oberfläche der Innenflächen bzw. der Innenflächenbereiche der innenseitigen Gehäuseschale 9₁₁ zusätzlich vergrößert, um den Wärmefluss der innenseitigen Gehäuseschale 9₁₁ zu beschleunigen.

Hierzu sind in einer ersten Ausprägung gemäß der Figur 3A auf den Innenflächen der innenseitigen Gehäuseschale 9₁₁, insbesondere auf der Innenfläche der Deckenfläche der innenseitigen Gehäuseschale 9₁₁, rippenförmige Erhöhungen 12₁ vorgesehen. Die Höhe der rippenförmigen Erhöhungen 12₁ und der Abstand zwischen den rippenförmige Erhöhungen 12₁ wird dabei so gewählt, dass der Abstand zwischen den Elektronik-Komponenten 4 und den rippenförmigen Erhöhungen 12₁ möglichst minimal ist und eine ausreichende Anzahl von rippenförmigen Erhöhungen 12₁ im Abstrahlungsbereich der Abwärme positioniert sind.

In einer zweiten Ausprägung gemäß der Figuren 4A und 4C sind auf der Innenfläche der innenseitigen Gehäuseschale 9₁₁, insbesondere auf der Innenfläche der Deckenfläche der innenseitigen Gehäuseschale 9₁₁, kreuzrippenförmige Erhöhungen 12₂ vorgesehen. Für die Höhe der kreuzrippenförmigen Erhöhungen 12₂ und für den Abstand zwischen den Einzelrippen der kreuzrippenförmigen Erhöhungen 12₂ gilt das zur ersten Ausprägung obig Gesagte analog.

In einer dritten Ausprägung gemäß der Figuren 5A und 5C sind auf der Innenfläche der innenseitigen Gehäuseschale 9₁₁, insbesondere auf der Innenfläche der Deckenfläche der innenseitigen Gehäuseschale 9₁₁, stiftförmige Erhöhungen 12₃ vorgesehen. Für die Höhe der stiftförmigen Erhöhungen 12₂ und für den Abstand zwischen den stiftförmigen Erhöhungen 12₂ gilt das zur ersten Ausprägung obig Gesagte analog. Der Durchmesser der einzelnen stiftförmigen Erhöhungen 12₂ in Relation zum Abstand zwischen den einzelnen stiftförmigen Erhöhungen 12₂ ist so zu wählen, dass eine optimierte innenseitige Oberfläche der innenseitigen Gehäuseschale 9₁₁ verwirklicht ist. Anstelle eines kreisförmigen Querschnittsprofils der einzelnen stiftförmigen Erhöhungen 12₃ sind auch rechteckförmige, quadratische, dreieckförmige, vieleckförmige oder ellipsenförmige Querschnittsprofile möglich.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere ist eine beliebige Kombination der einzelnen Varianten und Ausprägungen von der Erfindung mit abgedeckt, soweit sie technisch sinnvoll sind.

### Bezugszeichenliste

- 1: Kameramodul
- 2: Innenraum des Kameramoduls
- 3: Leiterplatte
- 4: Elektronik-Komponenten
- 5₁, 5₂: erster und zweiter Steckverbinder
- 6: optische Linse
- 7: Kameragehäuse
- 8₁, 8₂: Gehäuseteile
- 9ₙ, 9₁₂: außen- und innenseitige Gehäuseschale
- 10₁, 10₂, 10₃: rippen-, kreuzrippen- und stiftförmige Erhöhungen (auf Außenflächen der innenseitige Gehäuseschale)
- 11₁, 11₂, 11₃: rippen-, kreuzrippen- und stiftförmige Vertiefungen
- 12₁, 12₂, 12₃: rippen-, kreuzrippen- und stiftförmige Erhöhungen (auf Innenflächen der innenseitige Gehäuseschale)

## Patentansprüche

1. Gehäuseteil (8₁) für ein Kameragehäuse (7), insbesondere zur Verwendung im Automobilbereich, mit einer außenseitigen Gehäuseschale (9₁₂) und einer innenseitigen Gehäuseschale (9₁₁), wobei die außenseitige Gehäuseschale (9₁₂) aus einem Kunststoff und die innenseitige Gehäuseschale (9₁₁) aus einem Metall oder einem Kunststoff mit elektrisch leitenden Füllstoffen hergestellt ist, wobei die Wärmeleitfähigkeit des Metalls oder des Kunststoffs mit elektrisch leitenden Füllstoffen der innenseitigen Gehäuseschale (9₁₁) höher als die Wärmeleitfähigkeit des Kunststoffs der außenseitigen Gehäuseschale (9₁₂) ist, wobei über alle gegenüberliegenden Flächenbereiche der außenseitigen Gehäuseschale (9₁₂) und der innenseitigen Gehäuseschale (9₁₁), die sich über eine gesamte Außenfläche der innenseitigen Gehäuseschale (9₁₁) bzw. über eine gesamte Innenfläche der außenseitigen Gehäuseschale (9₁₂) erstrecken, die außenseitige Gehäuseschale (9₁₂) direkt ohne Einschluss einer dazwischen befindlichen Luftschicht mit der innenseitigen Gehäuseschale (9₁₁) verbunden ist,
**dadurch gekennzeichnet,**
**dass** an mindestens einem außenseitigen Flächenbereich der innenseitigen Gehäuseschale (9₁₁) jeweils mindestens eine Erhöhung (10₁; 10₂; 10₃) vorgesehen ist, die jeweils in einer zugehörigen Vertiefung (11₁; 11₂; 11₃) in einem zugehörigen innenseitigen Flächenbereich der außenseitigen Gehäuseschale (9₁₂) gesteckt ist, wobei in gegenüberliegenden Flächenbereichen jeweils die außenseitige Gehäuseschale (9₁₂) mit der innenseitigen Gehäuseschale (9₁₁) reibschlüssig verbunden ist, wobei eine Breite X_{iG} von mindestens einer Erhöhung (10₁; 10₂; 10₃) auf der innenseitigen Gehäuseschale (9₁₁) größer als eine Breite XaG einer zugehörigen Vertiefung (11₁; 11₂; 11₃) auf der außenseitigen Gehäuseschale (9₁₂) ist.

2. Gehäuseteil nach Patentanspruch 1,
**dadurch gekennzeichnet,**
**dass** die mindestens eine Erhöhung (10₁; 10₂; 10₃) jeweils eine rippenförmige Erhöhung (10₁) ist.

3. Gehäuseteil nach Patentanspruch 1,
**dadurch gekennzeichnet,**
**dass** die mindestens eine Erhöhung (10₁; 10₂; 10₃) jeweils eine kreuzrippenförmige Erhöhung (10₂) ist.

4. Gehäuseteil nach Patentanspruch 1,
**dadurch gekennzeichnet,**
**dass** die mindestens eine Erhöhung (10₁; 10₂; 10₃) jeweils eine stiftförmige Erhöhung (10₃) ist.

5. Gehäuseteil nach einem der Patentansprüche 1 bis 4,
**dadurch gekennzeichnet,**
**dass** an mindestens einem innenseitigen Flächenbereich der innenseitigen Gehäuseschale (9₁₁) jeweils mindestens eine Erhöhung (12₁; 12₂; 12₃) vorgesehen ist.

6. Gehäuseteil nach Patentanspruch 5,
**dadurch gekennzeichnet,**
**dass** die mindestens eine Erhöhung (12₁; 12₂; 12₃) jeweils eine rippenförmige Erhöhung (12₁) ist.

7. Gehäuseteil nach Patentanspruch 5,
**dadurch gekennzeichnet,**
**dass** die mindestens eine Erhöhung (12₁; 12₂; 12₃) jeweils eine kreuzrippenförmige Erhöhung (12₂) ist.

8. Gehäuseteil nach Patentanspruch 5,
**dadurch gekennzeichnet,**
**dass** die mindestens eine Erhöhung (12₁; 12₂; 12₃) jeweils eine stiftförmige Erhöhung (12₃) ist.

9. Kameragehäuse (7), insbesondere zur Verwendung im Automobilbereich, aus mindestens zwei Gehäuseteilen (8₁, 8₂), die jeweils umlaufend miteinander verschweißt sind, wobei mindestens ein Gehäuseteil (8₁, 8₂) ein Gehäuseteil (8₁) nach einem der Patentansprüche 1 bis 8 ist.

10. Kraftfahrzeug mit einem Kameragehäuse (7) nach Patentanspruch 9.

11. Herstellungsverfahren für ein Gehäuseteil (8₁), welches die folgenden Schritte umfasst:
- Spritzgießen einer außenseitigen Gehäuseschale (9₁₂) aus einem Kunststoff;
- Herstellen einer innenseitigen Gehäuseschale (9₁₁) aus einem Metall oder einem Kunststoff mit elektrisch leitenden Füllstoffen, wobei die Wärmeleitfähigkeit des Metalls oder des Kunststoffs mit elektrisch leitenden Füllstoffen der innenseitigen Gehäuseschale (9₁₁) höher als die Wärmeleitfähigkeit des Kunststoffs der außenseitigen Gehäuseschale (9₁₂) ist, und
- Zusammenpressen der außenseitigen Gehäuseschale (9₁₂) und der innenseitigen Gehäuseschale (9₁₁), so dass über alle gegenüberliegenden Flächenbereiche der außenseitigen Gehäuseschale (9₁₂) und der innenseitigen Gehäuseschale (9₁₁), die sich über eine gesamte Außenfläche der innenseitigen Gehäuseschale (9₁₁) und über eine gesamte Innenfläche der außenseitigen Gehäuseschale (9₁₂) jeweils erstrecken, die außenseitige Gehäuseschale (9₁₂) jeweils direkt unter Einschluss einer dazwischen befindlichen Luftschicht mit der innenseitigen Gehäuseschale (9₁₁) verbunden ist, wobei an mindestens einem außenseitigen Flächenbereich der innenseitigen Gehäuseschale (9₁₁) jeweils mindestens eine Erhöhung (10₁; 10₂; 10₃) vorgesehen ist, die jeweils in einer zugehörigen Vertiefung (11₁; 11₂; 11₃) in einem zugehörigen innenseitigen Flächenbereich der außenseitigen Gehäuseschale (9₁₂) gesteckt ist, wobei in gegenüberliegenden Flächenbereichen jeweils die außenseitige Gehäuseschale (9₁₂) mit der innenseitigen Gehäuseschale (9₁₁) reibschlüssig verbunden ist, wobei eine Breite X_{iG} von mindestens einer Erhöhung (10₁; 10₂; 10₃) auf der innenseitigen Gehäuseschale (9₁₁) größer als eine Breite XaG einer zugehörigen Vertiefung (11₁; 11₂; 11₃) auf der außenseitigen Gehäuseschale (9₁₂) ist.

## Claims

1. A housing part (8₁) for a camera housing (7), in particular, for use in the automotive sector, comprising an outer housing shell (9₁₂) and an inner housing shell (9₁₁), wherein the outer housing shell (9₁₂) is produced from a plastic and the inner housing shell (9₁₁) from a metal or a plastic with electrically conductive filler materials, wherein the heat conductivity of the metal or the plastic with electrically conductive filler materials of the inner housing shell (9₁₁) is greater than the heat conductivity of the plastic of the outer housing shell (9₁₂), wherein via all opposing surface regions of the outer housing shell (9₁₂) and the inner housing shell (9₁₁), which extend over an entire outer surface of the inner housing shell (9₁₁) or over an entire inner surface of the outer housing shell (9₁₂), the outer housing shell (9₁₂) is directly connected to the inner housing shell (9₁₁) without the inclusion of an air layer in between,
**characterized in**
**that** on at least one outer surface region of the inner housing shell (9₁₁) in each case at least one elevation (10₁; 10₂; 10₃) is provided, which in each case is inserted in an associated recess (11₁; 11₂; 11₃) in an associated inner surface region of the outer housing shell (9₁₂), wherein in the opposite surface regions in each case the outer housing shell (9₁₂) is frictionally connected to the inner housing shell (9₁₁), wherein a width X_{iG} of at least one elevation (10₁; 10₂; 10₃) on the inner housing shell (9₁₁) is greater than a width X_{aG} of an associated recess (11₁; 11₂; 11₃) on the outer housing shell (9₁₂).

2. The housing part according to patent claim 1,
**characterized in**
**that** the at least one elevation (10₁; 10₂; 10₃) is in each case a rib-shaped elevation (10₁).

3. The housing part according to patent claim 1,
**characterized in**
**that** the at least one elevation (10₁; 10₂; 10₃) is in each case a cross-rib-shaped elevation (10₂).

4. The housing part according to patent claim 1,
**characterized in**
**that** the at least one elevation (10₁; 10₂; 10₃) is in each case a pin-shaped elevation (10₃).

5. The housing part according to any one of patent claims 1 to 4,
**characterized in**
**that** on at least one inner surface region of the inner housing shell (9₁₁) in each case at least one elevation (12₁; 12₂; 12₃) is provided.

6. The housing part according to patent claim 5,
**characterized in**
**that** the at least one elevation (12₁; 12₂; 12₃) in each case is a rib-shaped elevation (12₁).

7. The housing part according to patent claim 5,
**characterized in**
**that** the at least one elevation (12₁; 12₂; 12₃) in each case is a cross-rib-shaped elevation (12₂).

8. The housing part according to patent claim 5,
**characterized in**
**that** the at least one elevation (12₁; 12₂; 12₃) in each case is a pin-shaped elevation (12₃).

9. A camera housing (7), in particular for use in the automotive sector, consisting of at least two housing parts (8₁, 8₂), which in each case are circumferentially welded to one another, wherein at least one housing part (8₁, 8₂) is a housing part (8₁) according to any one of patent claims 1 to 8.

10. A motor vehicle having a camera housing (7) according to patent claim 9.

11. A production method for a housing part (8₁), which comprises the following steps:
- injection molding of an outer housing shell (9₁₂) made of plastic;
- production of an inner housing shell (9₁₁) made of a metal or a plastic with electrically conductive filler materials, wherein the heat conductivity of the metal or of the plastic with electrically conductive filler materials of the inner housing shell (9₁₁) is greater than the heat conductivity of the plastic of the outer housing shell (9₁₂), and
- pressing the outer housing shell (9₁₂) and the inner housing shell (9₁₁) together, so that via all opposing surface regions of the outer housing shell (9₁₂) and the inner housing shell (9₁₁), which in each case extend over an entire outer surface of the inner housing shell (9₁₁) and over an entire inner surface of the outer housing shell (9₁₂), the outer housing shell (9₁₂) in each case is directly connected to the inner housing shell (9₁₁) with the inclusion of an air layer in between, wherein on at least one outer surface region of the inner housing shell (9₁₁) in each case at least one elevation (10₁; 10₂; 10₃) is provided, which in each case is inserted in an associated recess (11₁; 11₂; 11₃) in an associated inner surface region of the outer housing shell (9₁₂), wherein in the opposite surface regions in each case the outer housing shell (9₁₂) is frictionally connected to the inner housing shell (9₁₁), wherein a width X_{iG} of at least one elevation (10₁; 10₂; 10₃) on the inner housing shell (9₁₁) is greater than a width X_{aG} of an associated recess (11₁; 11₂; 11₃) on the outer housing shell (9₁₂).

## Revendications

1. Partie de boîtier (8₁) pour un boîtier de caméra (7), plus particulièrement destiné à être utilisé dans le domaine automobile, avec une coque de boîtier externe (9₁₂) et une coque de boîtier interne (9₁₁), dans laquelle la coque de boîtier externe (9₁₂) est constituée d'une matière plastique et la coque de boîtier interne (9₁₁) est constituée d'un métal ou d'une matière plastique avec des agents de charge électro-conducteurs, dans laquelle la conductivité thermique du métal ou de la matière plastique de la coque de boîtier interne (9₁₁) est supérieure à la conductivité thermique de la matière plastique de la coque de boîtier externe (9₁₂), dans laquelle, sur toutes les zones de surfaces opposées de la coque de boîtier externe (9₁₂) et de la coque de boîtier interne (9₁₁), qui s'étendent sur toute la surface externe de la coque de boîtier interne (9₁₁) resp. sur toute la surface interne de la coque de boîtier externe (9₁₂), la coque de boîtier externe (9₁₂) est reliée directement, sans insertion d'une couche d'air entre elles, avec la coque de boîtier interne (9₁₁),
**caractérisée en ce que**
sur au moins une zone de surface externe de la coque de boîtier interne (9₁₁), est prévu au moins un bossage (10₁ ; 10₂; 10₃), qui est inséré dans un renfoncement (11₁ ; 11₂; 11₃) correspondant dans une zone de surface interne correspondante de la coque de boîtier externe (9₁₂), dans laquelle, dans des zones de surfaces opposées, la coque de boîtier externe (9₁₂) est reliée par friction avec la coque de boîtier interne (9₁₁), dans laquelle une largeur X_{iG} d'au moins un bossage (10₁ ; 10₂; 10₃) sur la coque de boîtier interne (9₁₁) est supérieure à une largeur X_{aG} d'un renfoncement (11₁ ; 11₂ ; 11₃) correspondant sur la coque de boîtier externe (9₁₂).

2. Partie de boîtier selon la revendication 1,
**caractérisée en ce que**
l'au moins un bossage (10₁ ; 10₂; 10₃) est un bossage en forme de nervure (10₁).

3. Partie de boîtier selon la revendication 1,
**caractérisée en ce que**
l'au moins un bossage (10₁ ; 10₂; 10₃) est un bossage en forme de croisillon (10₂).

4. Partie de boîtier selon la revendication 1,
**caractérisée en ce que**
l'au moins un bossage (10₁ ; 10₂; 10₃) est un bossage en forme de tige (10₃).

5. Partie de boîtier selon l'une des revendications 1 à 4,
**caractérisée en ce que**
sur au moins une zone de surface interne de la coque de boîtier interne (9₁₁) est prévu au moins un bossage (12₁ ; 12₂; 12₃).

6. Partie de boîtier selon la revendication 5,
**caractérisée en ce que**
l'au moins un bossage (12₁ ; 12₂; 12₃) est un bossage en forme de nervure (12₁).

7. Partie de boîtier selon la revendication 5,
**caractérisée en ce que**
l'au moins un bossage (12₁ ; 12₂; 12₃) est un bossage en forme de croisillon (12₂).

8. Partie de boîtier selon la revendication 5,
**caractérisée en ce que**
l'au moins un bossage (12₁ ; 12₂; 12₃) est un bossage en forme de tige (12₃).

9. Boîtier de caméra (7), plus particulièrement destiné à être utilisé dans le domaine automobile, constitué d'au moins deux parties de boîtier (8₁, 8₂), qui sont soudées entre elles sur leur circonférence, dans lequel au moins une partie de boîtier (8₁, 8₂) est une partie de boîtier (8₁) selon l'une des revendications 1 à 8.

10. Véhicule automobile avec un boîtier de caméra (7) selon la revendication 9.

11. Procédé de fabrication pour une partie de boîtier (8₁), qui comprend les étapes suivantes :
- moulage par injection d'une coque de boîtier externe (9₁₂) à partir d'une matière plastique ;
- fabrication d'une coque de boîtier interne (9₁₁) à partir d'un métal ou d'une matière plastique avec des agents de charge électro-conducteurs, dans laquelle la conductivité thermique du métal ou de la matière plastique de la coque de boîtier interne (9₁₁) est supérieure à la conductivité thermique de la matière plastique de la coque de boîtier externe (9₁₂) et
- compression de la coque de boîtier externe (9₁₂) et de la coque de boîtier interne (9₁₁) de façon à ce que, sur toutes les zones de surfaces opposées de la coque de boîtier externe (9₁₂) et de la coque de boîtier interne (9₁₁), qui s'étendent sur toute la surface externe de la coque de boîtier interne (9₁₁) et sur toute la surface interne de la coque de boîtier externe (9₁₂), la coque de boîtier externe (9₁₂) soit reliée directement, sans insertion d'une couche d'air entre elles, avec la coque de boîtier interne (9₁₁), dans laquelle, sur au moins une zone de surface externe de la coque de boîtier interne (9₁₁), se trouve au moins un bossage (10₁ ; 10₂; 10₃), qui est inséré dans un renfoncement (11₁; 11₂; 11₃) correspondant dans une zone de surface interne correspondante de la coque de boîtier externe (9₁₂), dans laquelle, dans des zones de surfaces opposées, la coque de boîtier externe (9₁₂) est reliée par friction avec la coque de boîtier interne (9₁₁), dans laquelle une largeur X_{iG} d'au moins un bossage (10₁ ; 10₂; 10₃) sur la coque de boîtier interne (9₁₁) est supérieure à une largeur X_{aG} d'un renfoncement (11₁ ; 11₂; 11₃) correspondant sur la coque de boîtier externe (9₁₂).
